(19) Europäisches Patentamt
European Patent Office
Office européen des brevets

(11) EP 2 805 994 B1

# (12) EUROPEAN PATENT SPECIFICATION

(45) Date of publication and mention of the grant of the patent:
**13.09.2017 Bulletin 2017/37**

(21) Application number: **13738820.3**

(22) Date of filing: **21.01.2013**

(51) Int Cl.:
***C08L 23/08*** (2006.01) ***B29C 47/02*** (2006.01)
***C08K 3/22*** (2006.01) ***C08K 3/38*** (2006.01)
***C08L 23/10*** (2006.01) ***C08L 23/14*** (2006.01)
***C08L 83/04*** (2006.01) ***H01B 3/44*** (2006.01)
***H01B 7/295*** (2006.01) ***B29B 7/48*** (2006.01)
***B29C 47/40*** (2006.01) ***B29C 47/92*** (2006.01)

(86) International application number:
**PCT/JP2013/051093**

(87) International publication number:
**WO 2013/108919 (25.07.2013 Gazette 2013/30)**

## (54) FLAME-RETARDANT RESIN COMPOSITION, METHOD FOR PRODUCING SAME, MOLDED BODY OF SAME, AND ELECTRIC WIRE

FLAMMHEMMENDE HARZZUSAMMENSETZUNG, HERSTELLUNGSVERFAHREN DAFÜR, FORMKÖRPER DARAUS UND ELEKTRISCHER DRAHT

COMPOSITION DE RÉSINE IGNIFUGE, SON PROCÉDÉ DE PRODUCTION, CORPS MOULÉ À BASE DE CELLE-CI, ET FIL ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2012 JP 2012009892**

(43) Date of publication of application:
**26.11.2014 Bulletin 2014/48**

(73) Proprietor: **Mitsui Chemicals, Inc.**
**Tokyo 105-7117 (JP)**

(72) Inventors:
- **NODA, Kiminori**
  **Ichihara-shi**
  **Chiba 299-0108 (JP)**
- **YAMAGUCHI, Masayoshi**
  **Ichihara-shi**
  **Chiba 299-0108 (JP)**
- **KOMIYA, Kan**
  **099254 (SG)**
- **UEHARA, Hiroshi**
  **099254 (SG)**

(74) Representative: **Hoffmann Eitle**
**Patent- und Rechtsanwälte PartmbB**
**Arabellastraße 30**
**81925 München (DE)**

(56) References cited:
**EP-A1- 1 932 881** **EP-A1- 2 562 214**
**WO-A1-2011/132656** **JP-A- 2000 191 844**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 805 994 B1

## Description

### TECHNICAL FIELD

The present invention relates to a method for producing a flame-retardant resin composition which has an excellent balance of mechanical strength, flexibility, and flame-retardancy, to a flame-retardant resin composition produced by the method, to a molded body of the same, and to an electric wire.

### BACKGROUND ART

Propylene polymers are a material having excellent heat resistance, mechanical strength, and scratch resistance, and the molded bodies thereof are used for wide range of uses. Molded bodies obtained from a resin composition consisting of a typical polypropylene and an inorganic filler also have excellent heat resistance and mechanical strength, but, on the other hand, they have inferior flexibility and impact resistance. Thus, ethylene copolymers are mainly used for the purposes in which characteristics such as flexibility and impact resistance are required. However, molded bodies obtained from ethylene copolymer have inferior scratch resistance and heat resistance.
Thus, a molded body consisting of a propylene polymer and an inorganic filler (flame-retardant agent) is known as an electric wire or a wire harness in which scratch resistance is required (Patent Document 1). Also, it is known to compound a copolymer of propylene and butene, a polyethylene, and an inorganic filler to a polypropylene (Patent Document 2). Also, it is known to compound a random copolymer elastomer of ethylene and an $\alpha$-olefin or a styrene elastomer together with an inorganic filler to a propylene polymer (Patent Document 3). Further, a compound obtained by compounding a polypropylene, a maleic acid-modified polyethylene and a metal hydrate to a copolymer of ethylene and vinyl acetate is known (Patent Documents 4 to 8).
Various kinds of improvements are proposed as mentioned above, but further excellent performance is required in a balance of mechanical strength, flexibility, and flame-retardancy.
In JP 2000-191844, a flame-retardant resin composition is described. To 100 parts by weight of a polyolefinic resin are added 10-250 parts by weight of magnesium hydroxide, 10-100 parts by weight of zinc borate and 3-50 parts by weight of silicone powder to give a non-halogen flame-retardant resin composition. The polyolefinic resin is preferable one comprising one or more than one selected among ethylene-vinyl acetate copolymers, ethylene-ethyl acrylate copolymers, ethylene-propylene rubbers, polypropylenes and polyethylenes.
EP 2 562 214 A1 is a patent family member of WO 2011/132656 and describes a thermoplastic polymer composition. The thermoplastic polymer composition includes 1 to 350 parts by mass of a filler (D) with respect to 100 parts by mass of polymer components that comprise 50 to 90% by mass of an ethylene/unsaturated ester copolymer (A); 1 to 40% by mass of a propylene-based polymer (B) having a melting point as measured by differential scanning calorimetry (DSC) of from 120 to 170°C; and 1 to 49% by mass of a propylene-based polymer (C) having a melting point as measured by differential scanning calorimetry (DSC) of lower than 120°C or not being observed, provided that the total amount of (A), (B) and (C) is 100% by mass.

### PRIOR ART DOCUMENT

#### Patent Document

Patent Document 1: JP 2003-313377

Patent Document 2: JP 2008-97918

Patent Document 3: JP 2008-169257

Patent Document 4: JP 2008-94977

Patent Document 5: JP 2009-114230

Patent Document 6: JP 2009-54388

Patent Document 7: JP 2009-19190

Patent Document 8: JP 2009-216836

SUMMARY OF THE INVENTION

Problem to be Solved by the Invention

The object of the present invention is to provide a method for producing a flame-retardant resin composition having an excellent balance of mechanical strength such as tensile elongation, flexibility, and flame-retardancy, a flame-retardant resin composition produced by the method, a molded body (for example, an insulating material or a sheath) of the same, and an electric wire.

Means of Solving the Problem

The present invention is based on a discovery that a flame-retardant resin composition, which has a good trapping performance of a metal hydroxide in which the dispersibility of the metal hydroxide in the flame-retardant resin composition is good, and which has an excellent balance of tensile elongation, flexibility, and flame-retardancy, can be obtained by using a copolymer of ethylene and a vinyl ester and a specified propylene polymer in combination. Further, the present invention is based on a discovery that a molded body which has an excellent balance of tensile elongation, flexibility, and flame-retardancy can be obtained by using a specified flame-retardant resin composition.

The present invention relates to a method for producing a flame-retardant resin composition comprising, as a polymer component:

50 to 95% by mass of copolymer (A) of ethylene and a vinyl ester,
5 to 50% by mass of propylene copolymer (B) wherein the content of an $\alpha$-olefin except for propylene is 10 to 60% by mole, and
0 to 40% by mass of polypropylene (C) wherein the content of an $\alpha$-olefin except for propylene is less than 10% by mole;
wherein the total of components (A), (B), and (C) is 100% by mass;
and further comprising, with respect to 100 parts by mass of the total of components (A), (B), and (C):
50 to 350 parts by mass of metal hydroxide (D),
0.1 to 50 parts by mass of zinc borate (E), and
0.1 to 50 parts by mass of powdered silicone (F);
wherein the mass ratio [D/(E+F)] of component (D) with respect to the total amount of components (E) and (F) is 15 or less,
wherein the process comprises
melt-kneading the polymer component comprising at least copolymer (A) of ethylene and a vinyl ester and propylene copolymer (B) to produce a polymer composition (H); and
melt-kneading at least polymer composition (H), metal hydroxide (D), zinc borate (E), and powdered silicone (F).

Also, the present invention is a flame-retardant resin composition obtainable by the method for producing the above-mentioned flame-retardant resin composition.

Also, the present invention is a molded body comprising the above-mentioned flame-retardant resin composition, and an electric wire comprising an insulating material of an electric wire and/or an electric wire sheath, which is this molded body.

Effect of the Invention

The flame-retardant resin composition of the present invention has an excellent performance in a balance of tensile elongation, flexibility, and flame-retardancy, and can widely be used for molded bodies, particularly preferably for electric wires.

MODE FOR CARRYING OUT THE INVENTION

[Copolymer (A) of ethylene and vinyl ester]

Copolymer (A) of ethylene and a vinyl ester used in the present invention is a polymer obtained by copolymerizing at least ethylene and a vinyl ester. It may be a binary copolymer obtained by copolymerizing only ethylene and a vinyl ester, or may be a ternary or multicomponent copolymer obtained by copolymerizing them together with another monomer

(another polar monomer) as long as the performance of this binary copolymer is not deteriorated.

Specific examples of the vinyl ester used for copolymer (A) include vinyl acetate and vinyl propionate. Among these, vinyl acetate is preferable.

Examples of the other monomer used for copolymer (A) include acrylic acid, methacrylic acid, maleic acid, itaconic acid, maleic acid anhydride, itaconic acid anhydride, methyl acrylate, ethyl acrylate, isopropyl acrylate, n-propyl acrylate, isobutyl acrylate, n-butyl acrylate, 2-ethylhexyl acrylate, methyl methacrylate, ethyl methacrylate, isobutyl methacrylate, n-butyl methacrylate, glycidyl methacrylate, dimethyl maleate and diethyl maleate. Also, small amount of carbon monoxide can be copolymerized.

The ratio of the constitutional unit derived from the vinyl ester with respect to 100% by mass of the total of the constitutional unit derived from ethylene and the constitutional unit derived from the vinyl ester in copolymer (A) is usually 5 to 70% by mass, preferably 10 to 60% by mass, and more preferably 19 to 50% by mass. These ranges are important in terms of the balance of the mechanical strength and the flame-retardancy. In particular, the lower limit is important in terms of the flame-retardancy and the upper limit is important in terms of the mechanical strength.

From the standpoint of the physical property and the workability of the composition, the melt flow rate of copolymer (A) (according to JIS K7210-99, temperature: 190°C, load: 2160 g) is preferably 0.1 to 50 g/10min, more preferably 0.5 to 10 g/10min.

Copolymer (A) can be obtained, for example, by a radical copolymerization of ethylene and a vinyl ester at a high temperature and under a high pressure. In particular, a good random copolymer can be obtained by a polymerization with high pressure radical process by autoclave method.

[Propylene copolymer (B)]

Propylene copolymer (B) used in the present invention is a propylene copolymer in which the content of an α-olefin except for propylene is 10 to 60% by mole. Here, the content of an α-olefin except for propylene concretely means the ratio of the constitutional unit derived from the α-olefin except for propylene with respect to 100% by mole of the total constitutional unit of propylene copolymer (B). Also, propylene copolymer (B) is a copolymer consisting essentially of a constitutional unit derived from propylene and a constitutional unit derived from an α-olefin except for it, and does not essentially contain a constitutional unit derived from an copolymerization component except for them (another non-conjugated diene).

For example, a random copolymer or a block copolymer obtained by a copolymerization of propylene and at least one olefin with a carbon atom number of 2 to 20 except for propylene can be used as propylene copolymer (B). Examples of the α-olefin with a carbon atom number of 2 to 20 except for propylene include ethylene and α-olefins with a carbon atom number of 4 to 10 such as 1-butene, 1-pentene, 1-hexene, 4-methyl-1-pentene, 1-octene, 1-decene, 1-dodecene, 1-tetradecene, 1-hexadecene, 1-octadecene, and 1-eicosene.

The ratio of the constitutional unit derived from propylene with respect to 100% by mole of propylene copolymer (B) is 40 to 90% by mass, preferably 40 to 85% by mass, more preferably 40 to 80% by mass, particularly preferably 50 to 75% by mole. Also, the ratio of the constitutional unit derived from an α-olefin except for propylene is 10 to 60% by mass is preferably 15 to 60% by mass, more preferably 20 to 60% by mass, particularly preferably 25 to 50% by mole.

The melt flow rate of propylene copolymer (B) (according to ASTM D1238, temperature: 230°C, load: 2.16 kg) is preferably 0.1 to 50 (g/10min).

The melting point of propylene copolymer (B) measured by differential scanning calorimetry analysis (DSC) is less than 120°C or not observed, and preferably 100°C or lower or not observed. Here, "not observed" means that no crystal melting peak having a crystal melting heat of 1 J/g is observed in a range of -150 to 200°C. The measuring condition is described in the Examples.

The limiting viscosity [η] of propylene copolymer (B) measured in decalin at a temperature of 135°C is usually 0.01 to 10 dl/g, preferably 0.05 to 10 dl/g.

The triad tacticity (mm fraction) of propylene copolymer (B) measured by $^{13}$C-NMR is preferably 85% or more, more preferably 85 to 97.5%, particularly preferably 87 to 97%, most preferably 90 to 97%. When the triad tacticity (mm fraction) is in this range, the balance of the flexibility and the mechanical strength, in particular, is excellent. The mm fraction can be measured by using the method described from line 7 on page 21 to line 6 on page 26 in WO 2004-087775.

The method for producing propylene copolymer (B) is not particularly limited. For example, it can be obtained by a copolymerization of propylene and another α-olefin in a presence of a known catalyst for a stereoregular polymerization of an olefin to isotactic conformation or syndiotactic conformation, e.g. a catalyst in which a solid titanium component and an organometallic compound are a main component or a metallocene catalyst in which a metallocene compound is used as one component of the catalyst. Also, it can be obtained by a copolymerization of propylene and another α-olefin using a known catalyst for a polymerization of an olefin to atactic conformation. Preferably, as described below, it can be obtained by a copolymerization of propylene and an α-olefin with a carbon atom number of 2 to 20 (except for propylene) in a presence of a metallocene catalyst.

Specific examples of propylene copolymer (B) includes random copolymer (B-1) of propylene, ethylene and an α-olefin number with a carbon atom number of 4 to 20 and random copolymer (B-2) of propylene and an α-olefin with a carbon atom number of 4 to 20. By using this copolymer (B-1) or (B-2), the compatibility with a crystalline component contained in, for example, polypropylene (C) is developed, and a flame-retardant resin composition having more excellent tensile elongation and flexibility can be obtained. As follows, copolymers (B-1) and (B-2) are explained.

[Random copolymer (B-1) of propylene, ethylene and an α-olefin with a carbon atom number of 4 to 20]

Random copolymer (B-1) of propylene, ethylene and an α-olefin with a carbon atom number of 4 to 20 is a copolymer of propylene, ethylene, and at least one α-olefin with a carbon atom number of 4 to 20. Examples of the α-olefin with a carbon atom number of 4 to 20 include 1-butene, 1-pentene, 1-hexene, 4-methyl-1-pentene, 1-octene, 1-decene, 1-dodecene, 1-tetradecene, 1-hexadecene, 1-octadecene, and 1-eicosene. Among these, 1-butene and 1-octene are preferable.

Copolymer (B-1) satisfies following conditions (m) and (n):

(m) the molecular weight distribution (Mw/Mn) measured by gel permeation chromatography (GPC) is 1 to 3; and
(n) 40 to 85% by mole of a constitutional unit derived from propylene, 5 to 30% by mole of a constitutional unit derived from ethylene, and 5 to 30% by mole of a constitutional unit derived from the α-olefin with a carbon atom number of 4 to 20 are contained (here, the total of the constitutional unit derived from propylene, the constitutional unit derived from ethylene and the constitutional unit derived from the α-olefin with a carbon atom number of 4 to 20 is 100% by mole, and the total of the constitutional unit derived from ethylene and the constitutional unit derived from the α-olefin with a carbon atom number of 4 to 20 is preferably 15 to 60% by mole).

For more detail, when the total of the constitutional unit derived from propylene, the constitutional unit derived from ethylene and the constitutional unit derived from the α-olefin with a carbon atom number of 4 to 20 is 100% by mole, the ratio of the constitutional unit derived from propylene is preferably 60 to 82% by mole, more preferably 61 to 75% by mole; the ratio of the constitutional unit derived from ethylene is preferably 8 to 15% by mole, more preferably 10 to 14% by mole; and the ratio of the constitutional unit derived from the α-olefin with a carbon atom number of 4 to 20 is preferably 10 to 25% by mole, more preferably 15 to 25% by mole.

Copolymer (B-1) preferably satisfies at least one following conditions (o) and (p), and more preferably satisfies both:

(o) the Shore A hardness is 30 to 90; and
(p) the crystallinity measured by X-ray diffraction is 20% or less, preferably 10% or less.

The melting point Tm of copolymer (B-1) measured by DSC is preferably 50°C or lower or not observed. It is more preferable that the melting point is not observed. The melting point Tm of copolymer (B-1) is measured by DSC as follows. As for the measurement, an aluminum pan was filled with the sample, and it was heated to 200°C at 100°C/min, was kept at 200°C for 5 minutes, was cooled to -150°C at 10°C/min, and was then heated to 200°C at 10°C/min, which provided an endothermic peak as the melting point Tm. This melting point Tm is usually less than 120°C is preferably 100°C or lower, more preferably 40 to 95°C, particularly preferably 50 to 90°C. When the melting point Tm is in this range, a molded body having an excellent balance of the flexibility and the strength, in particular, can be obtained. Also, since the stickiness on the surface of the molded body is suppressed, the operation of the molded body becomes easy.

This copolymer (B-1) can be obtained, for example, by the method described in WO 2004/87775.

In the present invention, by using copolymer (B-1) described above, a molded body having improved flexibility and large tensile elongation is obtained. For example, in the case where this molded body is an electric wire, there is a merit that the electric wire coating is hardly broken when a force is applied.

[Random copolymer (B-2) of propylene and an α-olefin with a carbon atom number of 4 to 20]

Random copolymer (B-2) of propylene and an α-olefin with a carbon atom number of 4 to 20 is a copolymer of propylene and at least one α-olefin with a carbon atom number of 4 to 20. Specific examples of the α-olefin with a carbon atom number of 4 to 20 include the same compounds as in the case of copolymer (B-1). In particular, 1-butene is preferable.

Copolymer (B-2) satisfies following conditions (a) and (b):

(a) the molecular weight distribution (Mw/Mn) measured by gel permeation chromatography (GPC) is 1 to 3; and
(b) the melting point Tm (°C) and the content M of a comonomer constitutional unit evaluated by $^{13}$C-NMR spectrum

measurement satisfies a relational expression of

$$146\exp(-0.022M) \geq Tm \geq 125\exp(-0.032M)$$

(Tm is less than 120°C, and is preferably 100°C or lower).

The melting point Tm of copolymer (B-2) can be measured by the same method in the case of copolymer (B-1).
Copolymer (B-2) preferably satisfies following conditions (c):

(c) the crystallinity measured by X-ray diffraction is 40% or less, and is more preferably 35% or less.

When the total of the constitutional unit derived from propylene of copolymer (B-2) and the constitutional unit derived from the α-olefin with a carbon atom number of 4 to 20 is 100% by mole, the ratio of the constitutional unit derived from the α-olefin with a carbon atom number of 4 to 20 is preferably 10 to 50% by mole, more preferably 10 to 35% by mole.
This copolymer (B-2) can be obtained, for example, by the method described in JP 2007-186665 A.

[Polypropylene (C)]

Polypropylene (C) used in the present invention is a polypropylene in which the content of an α-olefin except for propylene is less than 10% by mole. Here, the content of an α-olefin except for propylene specifically means the ratio of the constitutional unit derived from the α-olefin except for propylene in 100% by mole of the total constitutional unit of polypropylene (C). Also, polypropylene (C) is typically a polymer consisting of a constitutional unit derived from propylene and, if desired, a constitutional unit derived from an α-olefin except for propylene, and does not substantially contain a constitutional unit derived from a copolymerization component except for these (another non-conjugated diene).
Examples of polypropylene (C) include not only propylene homopolymers but also copolymers of propylene and at least one α-olefin with a carbon atom number of 2 to 20 except for propylene. Examples of the α-olefin with a carbon atom number of 2 to 20 except for propylene include the same compounds as in the case of propylene copolymer (B), and the preferable range is also the same. A random copolymer of propylene and this α-olefin may be formed, or a block copolymer may be formed. The constitutional unit derived from this α-olefin may be contained in a ratio of less than 10% by mole in the total constitutional units of polypropylene (C), preferably in a ratio of 5% by mole or less.
The melt flow rate (MFR) of polypropylene (C) according to ASTM D1238, measured at 230°C under a load of 2.16 kg is usually 0.01 to 1000g/10min, preferably 0.05 to 100 g/10min, more preferably 0.1 to 50g/10min.
The melting point of polypropylene (C) measured by differential scanning calorimetry (DSC) is preferably 120 to 170°C, more preferably 125 to 165°C.
Polypropylene (C) may have any one of isotactic conformation and syndiotactic conformation. However, isotactic conformation is preferable from the standpoint of the heat resistance.
As polypropylene (C), plural polypropylenes can be used together if necessary. For example, two or more polypropylenes having a different melting point and stiffness can be used together.
As polypropylene (C), a homopolypropylene having excellent heat resistance (known one which usually has 3% by mole or less of a copolymerization component except for propylene), a block polypropylene having an excellent balance of heat resistance and impact resistance (known one which usually has 3 to 30% by mass of n-decane elution component), or a random polypropylene having an excellent balance of flexibility and transparency (known one which usually has a melting peak temperature of 120°C or higher measured by differential scanning calorimetry (DSC), more preferably of 125 to 150°C) may be selected and used in order to obtain intended physical properties. Also, it is possible to use these together.
This polypropylene (C) can be produced by a polymerization of propylene or by a copolymerization of propylene and another olefin using, for example, a solid catalyst component containing magnesium, titanium, a halogen, and an electron donor as an essential component, a Ziegler catalyst consisting of an organoaluminum compound and an electron donor, or a metallocene catalyst containing a metallocene compound as one component of the catalyst.

[Metal hydroxide (D)]

Metal hydroxide (D) used in the present invention is not specifically limited as long as it is a hydroxide of a metal. Specific Examples thereof include aluminum hydroxide, magnesium hydroxide, calcium hydroxide, barium hydroxide, manganese hydroxide, zinc hydroxide, and hydrotalcite. This can be used alone, or can be used in combination

with two or more kinds. In particular, it is preferable to use one or more metal hydroxide selected from the group consisting of magnesium hydroxide, aluminum hydroxide, and hydrotalcite. Among these, magnesium hydroxide alone, a mixture of magnesium hydroxide and a metal hydroxide other than magnesium hydroxide, aluminum hydroxide alone, or a mixture of aluminum hydroxide and a metal hydroxide other than aluminum hydroxide is preferable, and magnesium hydroxide alone, aluminum hydroxide, or a mixture of magnesium hydroxide and aluminum hydroxide is more preferable. For example, examples of the commercial magnesium hydroxide include trade name Magnifin (registered trademark) H5IV produced by Albemarle Corporation. Examples of the commercial aluminum hydroxide include trade name HIGILITE (registered trademark) HS-330 produced by Showa Denko K.K. and trade name CL-303 produced by Sumitomo Chemical Co. Ltd.

The average particle diameter of metal hydroxide (D) is usually 0.05 to 20 $\mu$m, preferably 0.1 to 5 $\mu$m.

Metal hydroxide (D) is preferably a metal hydroxide whose surface is treated with a surface treatment agent in order to improve the dispersibility in the composition. Examples of the surface treatment agent include alkali metal salts of higher fatty acids such as sodium caprate, sodium laurate, sodium myristate, sodium palmitate, sodium stearate, potassium stearate, sodium oleate, potassium oleate, and linoleate sodium; higher fatty acids such as capric acid, lauric acid, myristic acid, palmitic acid, stearic acid, oleic acid, and linoleic acid, fatty acid amides, fatty acid esters, higher aliphatic alcohols, titanium coupling agents such as isopropyl triisostearoyl titanate, isopropyl tris(dioctyl pyrophosphate) titanate, and tetraisopropyl bis(dioctyl phosphite) titanate; silane coupling agents such as vinyl trimethoxy silane, vinyl triethoxy silane, $\gamma$-methacryloxypropyl trimethoxy silane, and $\gamma$- glycidyloxypropyl trimethoxy silane; silicone oils; and various phosphates. For example, examples of the commercial magnesium hydroxide whose surface is treated with a higher fatty acid include trade name KISUMA (registered trademark) 5B produced by Kyowa Chemical Industry Co., Ltd..

The compounding ratio of metal hydroxide (D) is 50 to 350 parts by mass with respect to 100 parts by mass of the total of components (A), (B), and (C), and is preferably 150 to 300 parts by mass. When the compounding ratio is in the range, the flame-retardant resin composition can have a balance of flame retardancy, tensile elongation, and flexibility. Note that, the present invention is also excellent in good workability and in not too high hardness of the molded article despite compounding a large amount of metal hydroxide (D) such as the magnesium hydroxide, for example.

[Zinc borate (E)]

Zinc borate (E) used in the present invention is particularly limited, but the average particle diameter is preferably 5 $\mu$m or less, more preferably 3 $\mu$m or less. For example, examples of the commercial items include trade names ALKANEX (registered trademark) FRC-500 ($2ZnO/3B_2O_3{\cdot}3.5H_2O$) and ALKANEX (registered trademark) FRC-600 produced by MIZUSAWA INDUSTRIAL CHEMICALS, LTD., and trade names Firebrake (registered trademark) ZB, Firebrake (registered trademark) 415, and Firebrake (registered trademark) 500 produced by HAYAKAWA & CO,. LTD.

The compounding ratio of zinc borate (E) is 0.1 to 50 parts by mass with respect to 100 parts by mass of the total of components (A), (B), and (C), and is preferably 10 to 50 parts by mass.

[Powdered silicone (F)]

Powdered silicone (F) used in the present invention is not particularly limited, but is preferably a fine-particle powdered silicone. Also, it may be a powder obtained by blending a silicone resin which has a three-dimensional network structure by combining structural units of $SiO_2$, $RSiO_{3/2}$, $R_2SiO$, $R_3SiO_{1/2}$, and/or the like. Here, R means an alkyl group such as methyl group, ethyl group, or propyl group; an aromatic group such as phenyl group or benzyl group, or a vinyl group having an alkyl group or an aromatic group. Examples of the commercial powdered silicone include trade name DOW CORNING (registered trademark) 4-7081 RESIN MODIFIER, produced by Dow Corning Toray Co., Ltd.; trade names TORAYFIL (registered trademark) F-201, F-2201, F-202, F-250, R-900, R-902A, E-500, E-600, E-601, and E-506, produced by Dow Corning Toray Co., Ltd.; trade names X-40-9805, KR255, KR220L, KR282, and KR211, produced by Shin-Etsu Chemical Co., Ltd.; and trade names Silicone Resin Powder KMP-590, KMP-701, X-52-854, and X-52-1621, produced by Shin-Etsu Chemical Co., Ltd.

The compounding ratio of powdered silicone (F) is 0.1 to 50 parts by mass with respect to 100 parts by mass of the total of components (A), (B), and (C), and is preferably 0.1 to 40 parts by mass.

[copolymer (G) of ethylene and an $\alpha$-olefin]

The flame-retardant resin composition of the present invention may further contain copolymer (G) of ethylene and an $\alpha$-olefin as well as the above-mentioned components.

Copolymer (G) of ethylene and an $\alpha$-olefin is not particularly limited, but is preferably a copolymer of ethylene and an $\alpha$-olefin with a carbon number of 3 to 10. Specific examples of the $\alpha$-olefin with a carbon number of 3 to 10 include propylene, 1-butene, 1-pentene, 1-hexene, 3-methyl -1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 1-octene, and 1-decene. This may be used alone, or may be used in combination with two or more kinds. Among these, propylene, 1-butene, 1-hexene, and 1-octene are preferable.

With respect to 100% by mole of the total constitutional units of copolymer (G), the content of the constitutional unit derived from ethylene is 75 to 95% by mole, and the content of the constitutional unit derived from the $\alpha$-olefin is 5 to 25% by mole.

The density of copolymer (G) is preferably 0.855 to 0.910 g/$cm^3$, more preferably 0.857 to 0.890 g/$cm^3$.

The melt flow rate ($MFR_2$) of copolymer (G) at a temperature of 190°C under a load of 2.16 kg is preferably 0.1 to 100 g/10min, more preferably 0.1 to 20 g/10min.

The molecular weight distribution (Mw/Mn) of copolymer (G) evaluated by GPC method is preferably 1.5 to 3.5, more preferably 1.5 to 3.0, particularly preferably 1.8 to 2.5. Here, Mw means the weight average molecular weight, and Mn means the number average molecular weight.

The B value of copolymer (G) evaluated by $^{13}$C-NMR spectrum and the equation described below is preferably 0.9 to 1.5, more preferably 1.0 to 1.2.

$$\text{B value} = [P_{OE}] / (2 \cdot [P_E][P_O])$$

(In the equation, $[P_E]$ is the mole fraction of the content of the constitutional unit derived from ethylene contained in the copolymer, $[P_O]$ is the mole fraction of the content of the constitutional unit derived from the $\alpha$-olefin contained in the copolymer, and $[P_{OE}]$ is the ratio of ethylene/$\alpha$-olefin linkage with respect to the total dyad linkage in the copolymer.)

This B value is an index which shows a distribution state of ethylene and an $\alpha$-olefin in the copolymer of ethylene and the $\alpha$-olefin. When the B value is large, the block linkage of ethylene or the $\alpha$-olefin becomes shorter, and it is shown that the distribution of ethylene and the $\alpha$-olefin is more uniform and that the composition distribution of the copolymerized rubber is narrower. Also, when the B value is smaller than 1.0, the composition distribution of the copolymer of ethylene or the $\alpha$-olefin becomes wider, and the handling ability is tend to fall. This B value can be evaluated based on the report by J. C. Randall (Macromolecules, 15, 353 (1982)) or J. Ray (Macromolecules, 10, 773 (1977)).

The intensity ratio ($T\alpha\beta/T\alpha\alpha$) of copolymer (G) which is $T\alpha\alpha$ to $T\alpha\beta$ in $^{13}$C-NMR spectrum is preferably 0.5 or less, more preferably 0.4 or less, particularly preferably 0.3 or less. The $T\alpha\alpha$ and $T\alpha\beta$ are peak intensities of $CH_2$ in the constitutional unit derived from the $\alpha$-olefin with a carbon number of 3 or more, and mean two kinds of $CH_2$ described below whose position to the tertiary carbon are different.

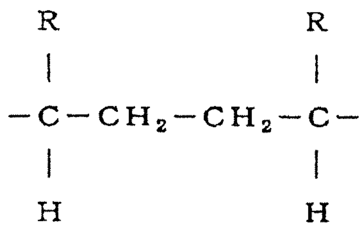

Tαβ

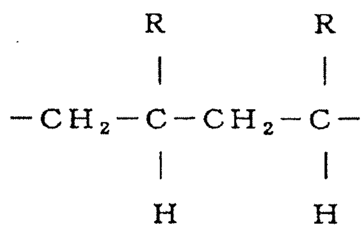

Tαα

This intensity ratio ($T\alpha\beta/T\alpha\alpha$) can be evaluated as follows.

First, the $^{13}$C-NMR spectrum of copolymer (G) of ethylene and the $\alpha$-olefin is measured using an NMR measuring apparatus (e.g. JEOL-GX270, produced by JEOL Ltd.). This measurement is carried out under the conditions of 67.8 MHz, 25°C, d6-benzene (128 ppm) standard using a mixed solution of hexachlorobutadiene/d6-benzene = 2/1 (volume ratio) whose concentration of the sample is adjusted to be 5% by mass. And, the $^{13}$C-NMR spectrum is analyzed according to the recommendation of Lindeman Adams (Analysis Chemistry 43, p 1245 (1971)) or J. C. Randall (Review Macromolecular Chemistry Physics, C29, 201 (1989)), and the intensity ratio ($T\alpha\beta/T\alpha\alpha$) is evaluated.

The ratio ($MFR_{10}/MFR_2$) of the melt flow rate ($MFR_{10}$) of copolymer (G) at a temperature of 190°C under a load of 10 kg and the melt flow rate ($MFR_2$) at a temperature of 190°C under a load of 2.16 kg preferably satisfy the following relation:

$$MFR_{10}/MFR_2 \geq 5.7$$

$$Mw/Mn + 4.7 \leq MFR_{10}/MFR_2$$

The above-mentioned relationships are important in terms of moldability and material strength.

Such copolymer (G) of ethylene and an $\alpha$-olefin can be obtained, for example, by a copolymerization of ethylene and an $\alpha$-olefin in a presence of a specified catalyst. For example, as the catalyst, a Ziegler catalyst constituted by a vanadium compound and an organoaluminum compound or a metallocene catalyst can be used. In particular, a metallocene catalyst is particularly preferable.

The metallocene catalyst may be composed of metallocene chemical compound (a) and compound (c) with which organoaluminumoxy compound (b) and/or metallocene compound (a) is reacted to form an ion pair. Further, it may be composed of component (a), and component (b) and/or (c), and organoaluminum compound (d). The copolymerization reaction can be carried out in presence of a catalyst in a liquid phase using the hydrocarbon solvent by any method of batch type, semicontinuous type, or continuous type. Also, in the copolymerization, a molecular weight modifier such as hydrogen can be used.

In the case where a metallocene catalyst composed of component (a) and component (b) or (c) is used, the concentration of component (a) in the polymerization system is usually 0.00005 to 0.1 mmol/l (polymerization volume), preferably 0.0001 to 0.05 mmol/l (polymerization volume). Also, component (b) may be supplied in an amount in which the molar ratio (Al / transition metal) of aluminum atom with respect to transition metal in metallocene compound (a) in the polymerization system comes to be 1 to 10000, preferably 10 to 5000. Also, component (c) may be supplied in an amount in which the molar ratio (c/a) of component (c) with respect to component (a) comes to be 0.5 to 20, preferably 1 to 10. The concentration of component (d) used may be usually 0 to 5 mmol/l (polymerization volume), or may be preferably 0 to 2 mmol/l (polymerization volume).

The reaction temperature in the copolymerization reaction is usually -20 to 150°C, preferably 0 to 120°C, more preferably 0 to 100°C. The reaction pressure is higher than 0 and 7.8 MPa (80 $kgf/cm^2$, gage pressure) or lower, and is preferably higher than 0 and 4.9 MPa (50 $kgf/cm^2$, gage pressure) or lower.

Copolymer (G) of ethylene and an $\alpha$-olefin may be modified by a graft of a vinyl compound having a polar group. Examples of the vinyl compound having a polar group include vinyl compounds having an oxygen-containing group such as acid, acid anhydride, ester, alcohol, epoxy, or ether; vinyl compounds having a nitrogen-containing group such as isocyanate or amide; and vinyl compounds having a silicon-containing group such as vinyl silane. The grafting amount of the vinyl compound having a polar group is usually 0.01 to 10% by mass, preferably 0.05 to 5% by mass when the mass of the ethylene/$\alpha$-olefin copolymer after the graft is 100% by mass.

[Flame-retardant resin composition]

The flame-retardant resin composition of the present invention is a composition which contains above-explained components (A) to (F) and component (G), if desired, and/or another component, if necessary.

In 100% by mass of the total of components (A), (B), and (C), the ratio of copolymer (A) is 50 to 90% by mass, preferably 55 to 90% by mass, more preferably 55 to 85% by mass. Also, the ratio of propylene copolymer (B) is 5 to 50% by mass, preferably 5 to 40% by mass. When the ratio of propylene copolymer (B) is too high, the flame retardancy is deteriorated. Also, the ratio of polypropylene (C) is 0 to 40% by mass, preferably 0 to 35% by mass, more preferably 0 to 30% by mass. When the ratio of polypropylene (C) is too high, the flexibility, the tensile elongation, and the flame retardancy are deteriorated.

The flame-retardant resin composition of the present invention preferably satisfies following conditions (1) and (2):

(1) the Shore D hardness measured according to ASTM D2240 is 40 to 65; and
(2) the tensile breaking elongation of a press sheet with a thickness of 2 mm measured according to JIS K7113-2 is 100% or more.

If these ranges of these conditions are satisfied, a flame-retardant resin composition having excellent tensile breaking elongation and flexibility can be obtained. The method for satisfying these ranges is not particularly limited, but is preferably, for example, by containing 15% by mass or more of component (B) in the flame-retardant resin composition[the total of components (A), (B), and (C) is 100% by mass], or by containing 10% by mass or more of component (B) and 1% by mass or more of polypropylene (C) [the total of components (A), (B), and (C) is 100% by mass].

Further, the flame-retardant resin composition of the present invention preferably satisfies following condition (1a) and above-mentioned condition (2):

(1a) the Shore D hardness measured according to ASTM D2240 is 40 to 60 (more preferably 40 to 55).

The method for satisfying these ranges is not particularly limited, but is preferably, for example, by containing 15% by mass or more (more preferably 25% by mass or more) of random copolymer (B-1) of propylene, ethylene and an α-olefin with a carbon atom number of 4 to 20 as component (B) in the flame-retardant resin composition [the total of components (A), (B), and (C) is 100% by mass], or by containing 10% by mass or more of copolymer (B-1) and 1 % by mass or more of polypropylene (C) [the total of components (A), (B), and (C) is 100% by mass].

Also, the flame-retardant resin composition of the present invention preferably satisfies following condition (1b) and above-mentioned condition (2):

(1b) the Shore D hardness measured according to ASTM D2240 is 45 to 65 (more preferably 55 to 65).

The method for satisfying these ranges is not particularly limited, but is preferably, for example, by containing 15% by mass or more (more preferably 25% by mass or more) of random copolymer (B-2) of propylene and an α-olefin with a carbon atom number of 4 to 20 as component (B) in the flame-retardant resin composition [the total of components (A), (B), and (C) is 100% by mass], or by containing 10% by mass or more of copolymer (B-2) and 1 % by mass or more of polypropylene (C) [the total of components (A), (B), and (C) is 100% by mass].

Further, with respect to 100 parts by mass of the total of components (A), (B), and (C), the ratio of metal hydroxide (D) is 50 to 350 parts by mass, preferably 150 to 300 parts by mass, more preferably 200 to 280 parts by mass. The ratio of zinc borate (E) is 0.1 to 50 parts by mass, preferably 5 to 50 parts by mass, more preferably 10 to 45 parts by mass. The ratio of powdered silicone (F) is 0.1 to 50 parts by mass, preferably 5 to 50 parts by mass, more preferably 10 to 45 parts by mass.

The mass ratio [D/(E+F)] of component (D) with respect to the total amount of components (E) and (F) is 15 or less, preferably 13 or less. When the mass ratio is in these ranges, the flame retardancy and the tensile elongation are improved more.

Metal hydroxide (D) that is an inorganic flame retardant is characterized in that it is not burned in itself, that an endotherm is happened at the time of decomposition, and that a water molecule with a large heat capacity is released by the decomposition. In late years, zinc borate (E) comes to be used as an alternative of antimony oxide. It suppresses smoke emission and afterglow and serves to the promotion of char generation, the prevention of drip, and the improvement of electric properties. It is used as an additive such as a polyvinyl chloride or a polyolefin and may be used together with a hydrated metal compound. Powdered silicone (F) results in the improvement of flame retardancy and drip property, and has excellent molding workability and mold release property. And, in the present invention, by the combination of zinc borate (E) and powdered silicone (F), a cross-linked structure that is a flame-retardancy domain is thought to be formed in the vicinity of the surface to result in the suppression of the burning. Still further, a high-level flame-retardancy composition can be obtained by combining metal hydroxide (D) in which endothermic water molecule is released.

Also, in the case where the total amount of zinc borate (E) added and powdered silicone (F) added with respect to the amount of metal hydroxide (D) added, in other words, in the case where the mass ratio [D/(E+F)] is large, the formation of the above-mentioned flame-retardancy domain comes to be small to result in making the suppression of the burning difficult.

In the case where copolymer (G) of ethylene and an α-olefin is used together, the ratio thereof is preferably 0.1 to 30 parts by mass with respect to 100 parts by mass of the total of components (A), (B), and (C), is more preferably 1 to 25 parts by mass, particularly preferably 3 to 25 parts by mass.

When the total of the flame-retardant resin composition is 100% by mass, the ratio of the total amount of components (A) to (G) is preferably 60 to 100% by mass, more preferably 80 to 100% by mass. In the case where the total amount of components (A) to (G) is not 100% by mass, the remaining part is, for example, another synthetic resin, another rubber, or another additive. These are a component compounded if necessary in a range where the object of the present invention is not damaged.

Examples of the other synthetic resin or the other rubber include, for example, polyolefin waxes such as polyethylene waxes and polypropylene waxes, low-density polyethylenes, medium-density polyethylenes, LLDPE (linear low-density polyethylene) consisting of a copolymer of ethylene and an α-olefin with a carbon number of 4 to 10, ethylene elastomers, and styrene elastomers.

The examples of the additive include, for example, antioxidants, heat stabilizers, UV absorbers, weathering stabilizers, antistatic agents, slip agents, an antiblocking agents, crystal nucleating agents, pigments, dyes, lubricants, hydrochloric acid absorbers, and copper inhibitors. Further, a flame-retardancy imparting agent (flame retardant, flame-retardancy auxiliary agent) other than components (D) to (F) can also be used together.

Specific examples of the flame-retardant imparting agent include bromine-type flame-retardant imparting agents; phosphorus-type flame-retardant imparting agents such as red phosphorus, phosphates, phosphoric amides, and organic phosphine oxides; nitrogen-type flame-retardant imparting agents such as ammonium polyphosphates,

phosphazenes, triazines, and melamine cyanurates; metal salt flame-retardant imparting agents such as alkali metal polystyrene sulfonates; inorganic flame-retardant imparting agents such as zinc stannate; and silicone flame-retardant imparting agents such as silicone oils. This can be used alone, or can be used in combination with two or more kinds.

The nitrogen-type flame-retardant imparting agent is preferably a compound having a triazine ring. The specific examples thereof include melamine, ammeline, melam, benzguanamine, acetoguanamine, phthalodiguanamine, melamine cyanurate, melamine pyrophosphate, butylene diguanamine, norbornene diguanamine, methylene dimelamine, ethylene dimelamine, trimethylene dimelamine, tetramethylene dimelamine, hexamethylene dimelamine, and 1,3-hexylene dimelamine. Among these, melamine cyanurate is preferable. The compounding ratio of the compound having a triazine ring is preferably 0.1 to 50 parts by mass with respect to 100 parts by mass of the total of components (A), (B), and (C), and is more preferably 5 to 40 parts by mass. The lower limits of these ranges have significance in generating sufficient burning inert gas (nitrogen gas) from a compound having a triazine ring to result in obtaining a synergistic effect with another flame-retardant imparting agent. Also, the upper limits have significance in the molding workability and the mechanical properties.

Specific examples of the inorganic flame-retardant imparting agent include antimony compounds such as antimony trioxide, antimony pentoxide, and sodium antimonite; zinc compounds such as zinc sulfate, zinc stannate, and zinc hydroxystannate; iron compounds such as ferrous hydroxyzincate and ferric oxide; tin compounds such as metastannic acid, stannous oxide, and stannic oxide; tungsten compounds such as metal tungstates and complex oxide acids of tungsten and metalloid; zirconium compounds; and hydrotalcites. These may be surface-treated with a fatty acid or a silane coupling agent. From the standpoint of flame-retardancy, zinc compounds are preferable, and zinc stannate and zinc hydroxystannate are particularly preferable. By compounding this, the speed of the shell formation at the time of burning is increased, and the shell formation becomes stronger. The average particle diameter of the zinc compound (in particular, zinc stannate or zinc hydroxystannate) is preferably 5 $\mu$m or less, more preferably 3 microns or less. Examples of the commercial zinc stannate ($ZnSnO_3$) and zinc hydroxystannate ($ZnSn(OH)_6$) include, for example, trade names ALKANEX ZS and ALKANEX ZHS produced by MIZUSAWA INDUSTRIAL CHEMICALS, LTD.

Examples of the silicone flame-retardant imparting agent include, for example, silicone resins and silicone oils. Examples of the silicone resin include, for example, resins having a three-dimensional network structure by combining structural units of $SiO_2$, $RSiO_{3/2}$, $R_2SiO$, $R_3SiO_{1/2}$, and/or the like. Here, R means an alkyl group such as methyl group, ethyl group, or propyl group; or an aromatic group such as phenyl group or benzyl group, or a vinyl group having an alkyl group or an aromatic group. Specific examples thereof include silicone oils such as dimethyl silicone oils and methyl phenyl silicone oils; modified silicone oils such as epoxy modified oils, alkyl modified oils, amino modified oils, carboxy modified oils, alcohol modified oils, and ether modified oils; silicone rubbers such as dimethyl polysiloxane rubbers and methyl vinyl polysiloxane rubbers; and silicone resins such as methyl silicone resin and ethyl silicone resin.

The Shore D hardness of the flame-retardant resin composition is preferably 65 or less, more preferably 60 or less. Also, the tensile elongation (according to JIS K7113-2) is preferably 100% or more, more preferably 150% or more.

For example, the flame-retardant resin composition can be obtained by charging each component concurrently or sequentially to a mixer such as a Henschel mixer, a V-type blender, a tumbler mixer, or a ribbon blender, by mixing them, and by melt-kneading them by a mono-screw extruder, a multi-screw extruder such as a twin-screw extruder, a kneader, a Banbury mixer, or the like, provided that the process involves two-stage melt-kneading according to the method of the present invention.

In Particular, when an equipment having excellent kneading performance such as a multi-screw extruder, a kneader, or a Banbury mixer, a high-quality flame-retardant resin composition in which each component is more uniformly dispersed is obtained. Also, at any stage, an additive (e.g., an antioxidant) can be added if necessary.

The method of producing the flame-retardant resin composition is a production method by melt-kneading copolymer (A) of ethylene and a vinyl ester, propylene copolymer (B), polypropylene (C), and, if desired, copolymer (G) of ethylene and an $\alpha$-olefin to produce polymer composition (H) and by melt-kneading at least this polymer composition (H), metal hydroxide (D), zinc borate (E), and powdered silicone (F). As this two-stage production method is used, foam generation at the time of kneading is suppressed, and a resin composition having more excellent appearance and mechanical properties is obtained. Note that, it is preferable that the resin composition does not contain a cross-linking agent at least in the step for producing polymer composition (H). Also, preferable is also a method by melt-kneading a part of these polymer components and all of metal hydroxide (D) to obtain a masterbatch and thereafter by melt-kneading it. In this case, a composition having more excellent balance of tensile elongation, flexibility, and flame-retardancy can be obtained.

[Molded body]

The molded body of the present invention contains the flame-retardant resin composition explained above. The shape of the molded body is not particularly limited, but various shapes can be formed by melt molding. Examples of the melt molding method include extrusion molding, rotational molding, calendar molding, injection molding, compression

molding, transfer molding, powder molding, blow molding, and vacuum molding. This molded body may be a complex with another material, e.g., a layered body.

Since this molded body contains a large amount of an inorganic filler and have an excellent balance of tensile elongation, flexibility, and flame-retardancy, it can be widely used, for example, for the purposes such as electric wires and building materials. More concretely, it is preferably used for the purposes of electric wire coatings such as insulating materials of an electric wire and electric wire sheaths. In particular, the scratch resistance of the molded body such as a pipe-shape electric wire can be improved. The coating layer such as the insulating material of an electric wire and the electric wire sheath can be formed around the electric wire by a known method, e.g., a method such as extrusion molding.

EXAMPLES

As follows, the present invention is further concretely explained based in accordance with the Examples, but the present invention is not limited to these. Note that Examples 1 to 9 are reference examples and not part of the claimed invention.

<Components (A) to (H)>

Each component used in the Examples is as follows.

[Copolymer (A) of ethylene and vinyl ester]

Ethylene/vinyl acetate copolymer (trade name: EVAFLEX EV170, produced by DU PONT-MITSUI POLYCHEMICALS CO., LTD) (hereinafter, abbreviated to "EVA")

[Propylene copolymer (B)]

[Copolymer (B-1) of propylene, ethylene, and 1-butene]

Propylene/ethylene/1-butene random copolymer (MFR = 8.5 g/10min, Tm = not observed, ethylene content = 14% by mole, 1-butene content = 20% by mole, Mw/Mn = 2.0, Shore A hardness = 38, crystallinity (WAXD method) = 5% or less, mm value = 90%) (prepared by the method described in JP 2007-186665 A) (hereinafter, abbreviated to "PBER")

[Copolymer (B-2) of propylene and 1-butene]

Propylene/1-butene copolymer (MFR = 7 g/10min, Tm = 75°C, 1-butene content = 26% by mole, Mw/Mn = 2.1, crystallinity (WAXD method) = 28%) was used. (prepared by the method described in JP 2007-186665 A) (hereinafter, abbreviated to "PBR")

[Polypropylene (C)]

Isotactic homopolypropylene (Tm = 160°C, MFR (230°C) = 0.5 g/10min) (hereinafter, abbreviated to "hPP")

[Metal hydroxide (D)]

Magnesium hydroxide (trade name: Magnifin (registered trademark) H5IV, produced by Albemarle Corporation) (hereinafter, abbreviated to "MDH")

[Zinc borate (E)]

Zinc borate (trade name: ALKANEX (registered trademark) FRC-600, produced by MIZUSAWA INDUSTRIAL CHEMICALS, LTD.)

[Powdered silicone (F)]

Polyorganosiloxane (trade name: DOW CORNING (registered trademark) 4-7081 RESIN MODIFIER, produced by Dow Corning Toray Co., Ltd., number average molecular weight (Mn) measured by GPC method = 1000000)

[Copolymer (G) of ethylene and an α-olefin]

Ethylene/1-butene copolymer produced by using a metallocene catalyst (density = 885 kg/$m^3$, MFR (g/10min, 190°C, under a load of 2.16 kg) = 0.5, Mw/Mn = 2.1, B value = 1.05) (hereinafter, abbreviated to "EBR")

[Polymer composition (H)]

Polymer composition produced by kneading 80% by mass of above-mentioned copolymer (A) of ethylene and vinyl ester and 20% by mass of above-mentioned copolymer (B-1) of propylene, ethylene, and 1-butene at 190°C using LABO PLASTMILL (produced by Toyo Seiki Seisaku-sho, Ltd.).

<Measurement methods of physical properties of each component>

Physical properties of the above-mentioned component were measured as follows.

(1) Content of comonomer (ethylene and 1-butene):

It was evaluated by the analysis of $^{13}$C-NMR spectrum.

(2) Melt flow rate (MFR):

It was evaluated according to ASTM D-1238 at 190°C or 230°C under a load of 2.16 kg.

(3) Melting point (Tm):

An exothermic or endothermic curve of DSC was derived, and the temperature at the top position of the melting peak in which ΔH at the heating time of was 1 J/g or more was considered as Tm. As for the measurement, an aluminum pan was filled with the sample, and it was heated to 200°C at 100°C/min, was kept at 200°C for 5 minutes, and was cooled to -150°C at 10°C/min, and was then heated to 200°C at 10°C/min, which provided an exothermic or endothermic curve for evaluating Tm.

(4) Molecular weight distribution (Mw/Mn):

It was measured by GPC (gel permeation chromatography) using orthodichlorobenzene solvent at 140°C.

(5) Density:

It was measured according to ASTM D1505.

(6) Crystallinity:

It was measured by the analysis of wide-angle X-ray measured by using CuKα as an X-ray source, using RINT2500 (produced by Rigaku Corporation) as a measuring apparatus.

(7) Shore A hardness:

A seat was produced by a press molding machine, and it was measured according to ASTM D2240.

<Evaluation items of Examples and Comparative Examples>

(1) Tensile elongation:

It was measured according to JIS K7113-2 using a press sheet with 2 mmt.

(2) Shore D hardness:

It was measured according to ASTM D2240.

(3) Flame-retardancy (vertical flame test) and extruding appearance evaluation:

An insulating electric wire sample with a finished diameter of 4.0 mm was obtained by coating an electric conductor (outside diameter: approximately 1.15 mm), in which 30 annealed copper wires with a strand diameter of 0.18 mm were twisted, with a flame-retardant resin composition with a thickness of 1.4 mm, using a melt extruder (trade name: LABO PLASTMILL, produced by Toyo Seiki Seisaku-sho, Ltd.) with a dice for electric wire installed, under the conditions that the cylinder temperature is 210°C, the dice temperature is 230°C, the screw rotation is 30 rpm, and the extrusion output is 1.6 to 1.8 kg/h. This sample was used to be evaluated according to the vertical flame test established in the UL standard UL1581VW-1. Hereinafter, this test is abbreviated to "VW-1". This VW-1 is an abbreviation of Vertical Wire, and the test is one of vertical flame tests in the UL standard. The sample is kept vertical and was ignited with flame for 15 seconds by a gas burner, and the frame is then extinguished for 15 seconds. This operation is repeated 5 times. In order to judge "pass" in this test, the five flames must be all extinguished within 60 seconds. Also, while this operation is repeated 5 times, neither the upper flag nor the underneath cotton must be burned. The product of only the electric wire which has passed this test can be labeled as "VW-1". The evaluation result columns of each TABLE show the result regarding pass or failure of VW-1 as well as the number of times at which the flame was extinguished for 10 seconds to 60 seconds among the 5-time flame ignitions.

The surface state of the above-mentioned molded article was observed by the naked eye, and the extruding appearance was evaluated with following three ranks.

"1": the surface is very smooth.
"2": the surface is smooth.
"3": the surface is desolate.

[Example 1]

Example 1 is a reference example and not part of the claimed invention.

A composition having a composition shown in TABLE 1 was kneaded using LABO PLASTMILL (produced by Toyo Seiki Seisaku-sho, Ltd.). This was molded to obtain a sheet with a thickness of 2 mm (heating temperature: 190°C, heating time: 7 minutes, cooling condition: 15°C/4min, cooling rate: approximately 40°C/min). Further, an insulating electric wire sample was produced by the above-mentioned method. The results of evaluating this sheet and electric wire sample are shown in TABLE 1.

[Examples 2 to 5 and Comparative Examples 1 to 4]

Example 2 to 5 are reference examples and not part of the claimed invention.

The evaluation was carried out in the same manner as in Example 1 except that the composition was changed to a composition having a composition shown in TABLE 1. The results are shown in TABLE 1.

[TABLE 1]

Table 1

| | | Ex.1 | Ex.2 | Ex.3 | Ex.4 | Ex.5 | Comp. Ex.1 | Comp. Ex.2 | Comp. Ex.3 | Comp. Ex.4 |
|---|---|---|---|---|---|---|---|---|---|---|
| (A) EVA | phr | 80 | 80 | 70 | 80 | 80 | 40 | 80 | 80 | 40 |
| (B-1) | phr | 20 | 20 | 30 | 10 | 10 | 60 | 20 | 10 | 10 |
| (B-2) | phr | | | | | | | | | |
| (C) | phr | | | | 10 | 10 | | | 10 | 50 |
| (D) MDH | phr | 240 | 240 | 260 | 260 | 240 | 240 | 240 | 240 | 260 |
| (E) ZB | phr | 30 | 30 | 30 | 15 | 20 | 30 | 5 | 5 | 15 |
| (F) Si | phr | 30 | 20 | 30 | 10 | 20 | 30 | 5 | 5 | 10 |
| (D) / {(E)+(F)} | | 4.0 | 4.8 | 4.3 | 10.4 | 6.0 | 4.0 | 24.0 | 24.0 | 10.4 |
| Tensile Elongation | % | 102 | 112 | 142 | 155 | 195 | 89 | 222 | 185 | 76 |
| Shore D | - | 48 | 48 | 51 | 54 | 51 | 48 | 48 | 51 | 68 |

(continued)

| | | Ex.1 | Ex.2 | Ex.3 | Ex.4 | Ex.5 | Comp. Ex.1 | Comp. Ex.2 | Comp. Ex.3 | Comp. Ex.4 |
|---|---|---|---|---|---|---|---|---|---|---|
| V W-1 | Pass or Failure | Pass | Pass | Pass | Pass | Pass | Failure | Failure | Failure | Failure |
| Number of times at which flame was extinguished for 10 seconds to 60 seconds among 5-time flame ignitions | Number | 2 | 2 | 2 | 2 | 2 | - | - | - | - |
| Extruding Appearance | | 2 | 2 | 2 | 2 | 2 | 2 | 2 | 2 | 3 |

As shown in TABLE 1, the flame-retardant resin composition of each Example had an excellent balance of flexibility and tensile elongation and had good flame-retardancy from vertical flame test, in comparison with the flame-retardant resin composition of each Comparative Example.

[Examples 6 to 8 and Comparative Examples 5 to 7]

Example 6 to 8 are reference examples and not part of the claimed invention.

The evaluation was carried out in the same manner as in Example 1 except that the composition was changed to a composition having a composition shown in TABLE 2. The results are shown in TABLE 2.

[TABLE 2]

Table 2

| | | | Ex.6 | Ex.7 | Ex.8 | | Comp. Ex.5 | Comp. Ex.6 | Comp. Ex.7 |
|---|---|---|---|---|---|---|---|---|---|
| (A) | phr | | 80 | 70 | 80 | | 40 | 80 | 80 |
| (B-1) | phr | | | | | | | | |
| (B-2) | phr | | 20 | 30 | 10 | | 60 | 20 | 10 |
| (C) | phr | | | | 10 | | | | 10 |
| (D) MDH | phr | | 240 | 260 | 260 | | 240 | 240 | 240 |
| (E) ZB | phr | | 30 | 30 | 20 | | 30 | 5 | 5 |
| (F) Si | phr | | 30 | 30 | 20 | | 30 | 5 | 5 |
| (D) / {(E)+(F)} | | | 4.0 | 4.3 | 6.5 | | 4.0 | 24.0 | 24.0 |
| Tensile Elongation | % | | 112 | 156 | 168 | | 85 | 155 | 80 |
| Shore D | - | | 54 | 57 | 57 | | 54 | 54 | 54 |
| VW-1 | Pass or Failure | | Pass | Pass | Pass | | Failure | Failure | Failure |
| Number of times at which flame was extinguished for 10 seconds to 60 seconds among 5-time flame ignitions | Number | | 2 | 2 | 2 | | - | - | - |
| Extruding Appearance | | | 2 | 2 | 2 | | 2 | 2 | 2 |

As shown in TABLE 2, the flame-retardant resin composition of each Example had an excellent balance of flexibility and tensile elongation and had good flame-retardancy from vertical flame test, in comparison with the flame-retardant resin composition of each Comparative Example.

[Example 9]

Example 9 is a reference example and not part of the claimed invention.

The evaluation was carried out in the same manner as in Example 1 except that the composition was changed to a composition having a composition shown in TABLE 3. The results are shown in TABLE 3.

[TABLE 3]

Table 3

| | | | Ex.9 |
|---|---|---|---|
| (A) | phr | | 80 |
| (B-1) | phr | | |
| (B-2) | phr | | 20 |
| (C) | phr | | |
| (D) MDH | phr | | 240 |
| (E) ZB | phr | | 30 |
| (F) Si | phr | | 30 |
| (G) EBR | phr | | 5 |
| (D)/{(E)+(F)} | | | 4.0 |
| Tensile Elongation | % | | 202 |
| Shore D | - | | 47 |
| V W-1 | Pass or Failure | | Pass |
| Number of times at which flame was extinguished for 10 seconds to 60 seconds among 5-time flame ignitions | Number | | 2 |
| Extruding Appearance | | | 2 |

As shown in TABLE 3, the tensile elongation and the flexibility were further improved by using copolymer (G) of ethylene and an $\alpha$-olefin.

[Example 10]

The evaluation was carried out in the same manner as in Example 1 except that the composition was produced firstly by producing polymer composition (H) shown in TABLE 4 and thereafter by melt-kneading the other components shown in TABLE 4. The results are shown in TABLE 3.

[TABLE 4]

Table 4

| | | Ex.10 |
|---|---|---|
| (H) Polymer Composition [(A) / (B-1) = 80/20 (wt%)] | phr | 100 |
| (D) MDH | phr | 240 |
| (E) ZB | phr | 30 |
| (F) Si | phr | 30 |
| (D) / {(E)+(F)} | | 4.0 |
| Tensile Elongation | % | 155 |

(continued)

| | | Ex.10 |
|---|---|---|
| Shore D | - | 46 |
| V W-1 | Pass or Failure | Pass |
| Number of times at which flame was extinguished for 10 seconds to 60 seconds among 5-time flame ignitions | Number | 0 (Five flames were all extinguished within 10 seconds) |
| Extruding Appearance | | 1 |

As shown in TABLE 4, by carrying out two-stage kneading, excellent flame-retardancy that the five flames were all extinguished within 10 seconds in VW-1 test was realized. This is more excellent result than the flame-retardancy in Examples 1 to 9 in which one-stage kneading was carried out (the number of times when the flame was extinguished for 10 seconds to 60 seconds among 5-time flame ignitions was 2 times). This result is thought to be because the dispersibility of the flame-retardant agent became better by the two-stage kneading. Also, the tensile elongation, the flexibility, and the extruding appearance were improved.

## Claims

**1.** A method for producing a flame-retardant resin composition comprising, as a polymer component:

50 to 95% by mass of copolymer (A) of ethylene and a vinyl ester,
5 to 50% by mass of propylene copolymer (B) wherein the content of an α-olefin except for propylene is 10 to 60% by mole, and
0 to 40% by mass of polypropylene (C) wherein the content of an α-olefin except for propylene is less than 10% by mole;
wherein the total of components (A), (B), and (C) is 100% by mass;
and further comprising, with respect to 100 parts by mass of the total of components (A), (B), and (C):
50 to 350 parts by mass of metal hydroxide (D),
0.1 to 50 parts by mass of zinc borate (E), and
0.1 to 50 parts by mass of powdered silicone (F);
wherein the mass ratio [D/(E+F)] of component (D) with respect to the total amount of components (E) and (F) is 15 or less,
wherein the process comprises
melt-kneading the polymer component comprising at least copolymer (A) of ethylene and a vinyl ester and propylene copolymer (B) to produce a polymer composition (H); and
melt-kneading at least polymer composition (H), metal hydroxide (D), zinc borate (E), and powdered silicone (F).

**2.** The method for producing the flame-retardant resin composition according to claim 1, wherein component (B) is random copolymer (B-1) of propylene, ethylene and an α-olefin with a carbon number of 4 to 20, which satisfies following conditions (m) and (n):

(m) the molecular weight distribution (Mw/Mn) measured by gel permeation chromatography (GPC) is 1 to 3; and
(n) 40 to 85% by mole of a constitutional unit derived from propylene, 5 to 30% by mole of a constitutional unit derived from ethylene, and 5 to 30% by mole of a constitutional unit derived from the α-olefin with a carbon number of 4 to 20 are contained, wherein the total of the constitutional unit derived from propylene, the constitutional unit derived from ethylene and the constitutional unit derived from the α-olefin with a carbon number of 4 to 20 is 100% by mole.

**3.** The method for producing the flame-retardant resin composition according to claim 1, wherein component (B) is random copolymer (B-2) of propylene and an α-olefin with a carbon number of 4 to 20, which satisfies following conditions (a) and (b):

(a) the molecular weight distribution (Mw/Mn) measured by gel permeation chromatography (GPC) is 1 to 3; and
(b) the melting point Tm (°C) and the content M (% by mole) of a comonomer constitutional unit evaluated by

$^{13}C$-NMR spectrum measurement satisfies a relational expression of

$$146\exp(-0.022M) \geq Tm \geq 125\exp(-0.032M)$$

wherein Tm is less than 120°C.

**4.** The method for producing the flame-retardant resin composition according to claim 1, wherein the flame-retardant resin composition further comprises 0.1 to 30 parts by mass of copolymer (G) of ethylene and an $\alpha$-olefin with respect to 100 parts by mass of the total of components (A), (B), and (C), and wherein polymer composition (H) is produced by melt-kneading a polymer component comprising at least components (A), (B) and (G).

**5.** The method for producing the flame-retardant resin composition according to claim 1, comprising, with respect to 100 parts by mass of the total of components (A), (B), and (C):

150 to 300 parts by mass of metal hydroxide (D);
10 to 50 parts by mass of zinc borate (E); and
0.1 to 40 parts by mass of powdered silicone (F),
wherein the mass ratio [D/(E+F)] is 13 or less.

**6.** The method for producing the flame-retardant resin composition according to claim 1, wherein the flame-retardant resin composition comprises 15% by mass or more of component (B), or comprises 10% by mass or more of component (B) and 1% by mass or more of polypropylene (C), wherein the total of components (A), (B), and (C) is 100% by mass;
further satisfying following conditions (1) and (2):

(1) the Shore D hardness measured according to ASTM D2240 is 40 to 65; and
(2) the tensile breaking elongation of a press sheet with a thickness of 2 mm measured according to JIS K7113-2 is 100% or more.

**7.** The method for producing the flame-retardant resin composition according to claim 2, wherein the flame-retardant resin composition comprises 15% by mass or more of random copolymer (B-1) as component (B), or comprises 10% by mass or more of copolymer (B-1) and 1% by mass or more of polypropylene (C), wherein the total of components (A), (B), and (C) is 100% by mass;
further satisfying following conditions (1a) and (2):

(1a) the Shore D hardness measured according to ASTM D2240 is 40 to 60; and
(2) the tensile breaking elongation of a press sheet with a thickness of 2 mm measured according to JIS K7113-2 is 100 % or more.

**8.** The method for producing the flame-retardant resin composition according to claim 3, wherein the flame-retardant resin composition comprises 15% by mass or more of random copolymer (B-2) as component (B), or comprises 10% by mass or more of copolymer (B-2) and 1% by mass or more of polypropylene (C), wherein the total of components (A), (B), and (C) is 100% by mass;
further satisfying following conditions (1b) and (2):

(1b) the Shore D hardness measured according to ASTM D2240 is 45 to 65; and
(2) the tensile breaking elongation of a press sheet with a thickness of 2 mm measured according to JIS K7113-2 is 100% or more.

**9.** A flame-retardant resin composition, obtainable by the method according to any one of claims 1 to 8.

**10.** A molded body, comprising the flame-retardant resin composition according to claim 9.

**11.** The molded body according to as claimed in claim 10, which is an insulating material of an electric wire or an electric wire sheath.

**12.** An electric wire comprising an insulating material of an electric wire and/or an electric wire sheath, which is the molded body according to claim 10.

**13.** The electric wire according to claim 12, wherein the electric wire is an electric wire for power cords, an electric wire for appliances, or an electric wire for house wirings.

## Patentansprüche

**1.** Verfahren zur Herstellung einer flammhemmenden Harzzusammensetzung, umfassend als eine Polymerkomponente:

50 bis 95 Massen-% Copolymer (A) von Ethylen und einem Vinylester,
5 bis 50 Massen-% Propylencopolymer (B), wobei der Gehalt an $\alpha$-Olefin mit Ausnahme von Propylen 10 bis 60 Mol-% beträgt, und
0 bis 40 Massen-% Polypropylen (C), wobei der Gehalt an $\alpha$-Olefin mit Ausnahme von Propylen weniger als 10 Mol-% beträgt;
wobei die Gesamtmenge der Komponenten (A), (B) und (C) 100 Massen-% beträgt;
und zusätzlich umfassend, bezogen auf 100 Massenteile der Gesamtmenge der Komponenten (A), (B) und (C):
50 bis 350 Massenteile Metallhydroxid (D),
0,1 bis 50 Massenteile Zinkborat (E), und
0,1 bis 50 Massenteile pulverisiertes Silikon (F);
wobei das Massenverhältnis [D/(E+F)] der Komponente (D) zur Gesamtmenge der Komponenten (E) und (F) 15 oder weniger beträgt,
wobei das Verfahren
das Schmelzkneten der Polymerkomponente, umfassend mindestens Copolymer (A) von Ethylen und einem Vinylester und Propylencopolymer (B), um eine Polymerzusammensetzung (H) herzustellen; und
das Schmelzkneten von mindestens der Polymerzusammensetzung (H), Metallhydroxid (D), Zinkborat (E) und pulverisiertem Silikon (F)
umfasst.

**2.** Verfahren zur Herstellung der flammhemmenden Harzzusammensetzung gemäß Anspruch 1, bei dem Komponente (B) ein statistisches Copolymer (B-1) von Propylen, Ethylen und einem $\alpha$-Olefin mit einer Kohlenstoffzahl von 4 bis 20 ist, das die folgende Bedingungen (m) und (n) erfüllt:

(m) die Molekulargewichtsverteilung (Mw/Mn), gemessen per Gelpermeationschromatographie (GPC), beträgt 1 bis 3; und
(n) es sind 40 bis 85 Mol-% einer von Propylen abgeleiteten Struktureinheit, 5 bis 30 Mol-% einer von Ethylen abgeleiteten Struktureinheit und 5 bis 30 Mol-% einer von dem $\alpha$-Olefin mit einer Kohlenstoffzahl von 4 bis 20 abgeleiteten Struktureinheit enthalten, wobei die Gesamtmenge der von Propylen abgeleiteten Struktureinheit, der von Ethylen abgeleiteten Struktureinheit und der von dem $\alpha$-Olefin mit einer Kohlenstoffzahl von 4 bis 20 abgeleiteten Struktureinheit 100 Mol-% beträgt.

**3.** Verfahren zur Herstellung der flammhemmenden Harzzusammensetzung gemäß Anspruch 1, bei dem Komponente (B) ein statistisches Copolymer (B-2) von Propylen und einem $\alpha$-Olefin mit einer Kohlenstoffzahl von 4 bis 20 ist, das die folgenden Bedingungen (a) und (b) erfüllt:

(a) die Molekulargewichtsverteilung (Mw/Mn), gemessen per Gelpermeationschromatographie (GPC), beträgt 1 bis 3; und
(b) der Schmelzpunkt Tm (°C) und der Gehalt M (Mol-%) einer Comonomer-Struktureinheit, ermittelt durch Messung des $^{13}$C-NMR-Spektrums, erfüllen den relativen Ausdruck

$$146\exp(-0.022M) \geq Tm \geq 125\exp(-0.032M)$$

worin Tm kleiner als 120°C ist.

4. Verfahren zur Herstellung der flammhemmenden Harzzusammensetzung gemäß Anspruch 1, wobei die flammhemmende Harzzusammensetzung zusätzlich 0,1 bis 30 Massenteile Copolymer (G) von Ethylen und einem $\alpha$-Olefin, bezogen auf 100 Massenteile der Gesamtmenge der Komponenten (A), (B) und (C), umfasst und wobei die Polymerzusammensetzung (H) durch Schmelzkneten einer Polymerkomponente, umfassend mindestens die Komponenten (A), (B) und (G), hergestellt wird.

5. Verfahren zur Herstellung der flammhemmenden Harzzusammensetzung gemäß Anspruch 1, umfassend, bezogen auf 100 Massenteile der Gesamtmenge der Komponenten (A), (B) und (C):

150 bis 300 Massenteile Metallhydroxid (D);
10 bis 50 Massenteile Zinkborat (E); und
0,1 bis 40 Massenteile pulverisiertes Silikon (F),
wobei das Massenverhältnis [D/(E+F)] 13 oder weniger beträgt.

6. Verfahren zur Herstellung der flammhemmenden Harzzusammensetzung gemäß Anspruch 1, bei dem die flammhemmende Harzzusammensetzung 15 Massen-% oder mehr der Komponente (B) umfasst oder 10 Massen-% oder mehr der Komponente (B) und 1 Massen-% oder mehr Polypropylen (C) umfasst, wobei die Gesamtmenge der Komponenten (A), (B) und (C) 100 Massen-% beträgt;
wobei sie zusätzlich die folgenden Bedingungen (1) und (2) erfüllt:

(1) die Shore-D-Härte, gemessen gemäß ASTM D2240, beträgt 40 bis 65; und
(2) die Zugbruchdehnung, gemessen gemäß JIS K7113-2, eines gepressten Sheets mit einer Dicke von 2 mm beträgt 100% oder mehr.

7. Verfahren zur Herstellung der flammhemmenden Harzzusammensetzung gemäß Anspruch 2, bei dem die flammhemmende Harzzusammensetzung 15 Massen-% oder mehr statistisches Copolymer (B-1) als Komponente (B) umfasst oder 10 Massen-% oder mehr Copolymer (B-1) und 1 Massen-% oder mehr Polypropylen (C) umfasst, wobei die Gesamtmenge der Komponenten (A), (B) und (C) 100 Massen-% beträgt;
wobei sie zusätzlich die folgenden Bedingungen (1a) und (2) erfüllt:

(1a) die Shore-D-Härte, gemessen gemäß ASTM D2240, beträgt 40 bis 60; und
(2) die Zugbruchdehnung, gemessen gemäß JIS K7113-2, eines gepressten Sheets mit einer Dicke von 2 mm beträgt 100% oder mehr.

8. Verfahren zur Herstellung der flammhemmenden Harzzusammensetzung gemäß Anspruch 3, bei dem die flammhemmende Harzzusammensetzung 15 Gew-% oder mehr statistisches Copolymer (B-2) als Komponente (B) umfasst oder 10 Massen-% oder mehr Copolymer (B-2) und 1 Massen-% oder mehr Polypropylen (C) umfasst, wobei die Gesamtmenge der Komponenten (A), (B) und (C) 100 Massen-% beträgt;
wobei sie zusätzlich die folgenden Bedingungen (1b) und (2) erfüllt:

(1b) die Shore-D-Härte, gemessen gemäß ASTM D2240, beträgt 45 bis 65; und
(2) die Zugbruchdehnung, gemessen gemäß JIS K7113-2, eines gepressten Sheets mit einer Dicke von 2 mm beträgt 100% oder mehr.

9. Flammhemmende Harzzusammensetzung, erhältlich durch das Verfahren gemäß einem der Ansprüche 1 bis 8.

10. Formkörper, umfassend die flammhemmende Harzzusammensetzung gemäß Anspruch 9.

11. Formkörper gemäß Anspruch 10, der ein Isoliermaterial für einen elektrischen Draht oder ein Mantel für einen elektrischen Draht ist.

12. Elektrischer Draht, umfassend ein Isoliermaterial für einen elektrischen Draht und/oder einen Mantel für einen elektrischen Draht, das/der der Formkörper gemäß Anspruch 10 ist.

13. Elektrischer Draht gemäß Anspruch 12, wobei der elektrische Draht ein elektrischer Draht für Stromkabel, ein elektrischer Draht für Geräte oder ein elektrischer Draht für Hausverdrahtungen ist.

## Revendications

1. Procédé de production d'une composition de résine ignifuge comprenant, comme composant polymère :

   50 à 95 % en poids d'un copolymère (A) d'éthylène et d'un ester de vinyle,
   5 à 50 % en poids d'un copolymère de propylène (B) dans lequel la teneur en $\alpha$-oléfine hormis le propylène est de 10 à 60 % en mole, et
   0 à 40 % en poids d'un polypropylène (C) dans lequel la teneur en $\alpha$-oléfine hormis le propylène est inférieure à 10 % en mole ;
   dans lequel le total des composants (A), (B) et (C) est de 100 % en poids ;
   et comprenant en outre, par rapport à 100 parties en poids du total des composants (A), (B) et (C) :
   50 à 350 parties en poids d'un hydroxyde métallique (D),
   0,1 à 50 parties en poids de borate de zinc (E), et
   0,1 à 50 parties en poids d'une silicone en poudre (F) ;
   dans lequel le rapport pondéral [D/(E+F)] du composant (D) par rapport à la quantité totale des composants (E) et (F) est de 15 ou moins,
   dans lequel le procédé comprend
   le malaxage à l'état fondu du composant polymère comprenant au moins le copolymère (A) d'éthylène et d'un ester de vinyle et du copolymère de propylène (B) pour produire une composition polymère (H) ; et
   le malaxage à l'état fondu d'au moins la composition polymère (H), de l'hydroxyde métallique (D), du borate de zinc (E) et de la silicone en poudre (F).

2. Procédé de production de la composition de résine ignifuge selon la revendication 1, dans lequel le composant (B) est un copolymère statistique (B-1) de propylène, d'éthylène et d'une $\alpha$-oléfine contenant un nombre de carbone de 4 à 20, qui satisfait les conditions (m) et (n) suivantes :

   (m) la répartition des poids moléculaires (Mw/Mn) mesurée par chromatographie par perméation sur gel (GPC) est de 1 à 3 ; et
   (n) 40 à 85 % en mole d'un motif constitutif dérivé du propylène, 5 à 30 % en mole d'un motif constitutif dérivé de l'éthylène, et 5 à 30 % en mole d'un motif constitutif dérivé de l'$\alpha$-oléfine contenant un nombre de carbone de 4 à 20 sont contenus, dans

   lequel le total du motif constitutif dérivé du propylène, du motif constitutif dérivé de l'éthylène et du motif constitutif dérivé de l'$\alpha$-oléfine contenant un nombre de carbone de 4 à 20 est de 100 % en mole.

3. Procédé de production de la composition de résine ignifuge selon la revendication 1, dans lequel le composant (B) est un copolymère statistique (B-2) de propylène et d'une $\alpha$-oléfine contenant un nombre de carbone de 4 à 20, qui satisfait les conditions (a) et (b) suivantes :

   (a) la répartition des poids moléculaires (Mw/Mn) mesurée par chromatographie par perméation sur gel (GPC) est de 1 à 3 ; et
   (b) le point de fusion Tm (°C) et la teneur M (% en mole) d'un motif constitutif comonomère évaluée par une mesure sur un spectre RMN $^{13}C$ satisfont l'expression relationnelle suivante

$$146\exp(-0{,}022M) \geq Tm \geq 125\exp(-0{,}032M)$$

   dans laquelle Tm est inférieure à 120 °C.

4. Procédé de production de la composition de résine ignifuge selon la revendication 1, dans lequel la composition de résine ignifuge comprend en outre 0,1 à 30 parties en poids d'un copolymère (G) d'éthylène et d'une $\alpha$-oléfine par rapport à 100 parties en poids du total des composants (A), (B) et (C), et dans lequel une composition polymère (H) est produite par le malaxage à l'état fondu d'un composant polymère comprenant au moins les composants (A), (B) et (G).

5. Procédé de production de la composition de résine ignifuge selon la revendication 1, comprenant, par rapport à 100 parties en poids du total des composants (A), (B) et (C):

150 à 300 parties en poids d'un hydroxyde métallique (D) ;
10 à 50 parties en poids de borate de zinc (E) ; et
0,1 à 40 parties en poids d'une silicone en poudre (F),
dans lequel le rapport pondéral [D/(E+F)] est de 13 ou moins.

6. Procédé de production de la composition de résine ignifuge selon la revendication 1, dans lequel la composition de résine ignifuge comprend 15 % en poids ou plus de composant (B), ou comprend 10 % en poids ou plus de composant (B) et 1 % en poids ou plus de polypropylène (C), dans lequel le total des composants (A), (B) et (C) est de 100 % en poids ;
satisfaisant en outre les conditions (1) et (2) suivantes :

   (1) la dureté Shore D mesurée selon la norme ASTM D2240 est de 40 à 65 ; et
   (2) l'allongement à la rupture par traction d'une feuille de presse d'une épaisseur de 2 mm mesuré selon la norme JIS K7113-2 est de 100 % ou plus.

7. Procédé de production de la composition de résine ignifuge selon la revendication 2, dans lequel la composition de résine ignifuge comprend 15 % en poids ou plus du copolymère statistique (B-1) en tant que composant (B), ou comprend 10 % en poids ou plus du copolymère (B-1) et 1 % en poids ou plus du polypropylène (C), dans lequel le total des composants (A), (B) et (C) est de 100 % en poids ;
satisfaisant en outre les conditions (1a) et (2) suivantes :

   (1a) la dureté Shore D mesurée selon la norme ASTM D2240 est de 40 à 60 ; et
   (2) l'allongement à la rupture par traction d'une feuille de presse d'une épaisseur de 2 mm mesuré selon la norme JIS K7113-2 est de 100 % ou plus.

8. Procédé de production de la composition de résine ignifuge selon la revendication 3, dans lequel la composition de résine ignifuge comprend 15 % en poids ou plus du copolymère statistique (B-2) en tant que composant (B), ou comprend 10 % en poids ou plus du copolymère (B-2) et 1 % en poids ou plus du polypropylène (C), dans lequel le total des composants (A), (B) et (C) est de 100 % en poids ;
satisfaisant en outre les conditions (1b) et (2) suivantes :

   (1b) la dureté Shore D mesurée selon la norme ASTM D2240 est de 45 à 65 ; et
   (2) l'allongement à la rupture par traction d'une feuille de presse d'une épaisseur de 2 mm mesuré selon la norme JIS K7113-2 est de 100 % ou plus.

9. Composition de résine ignifuge, pouvant être obtenue par le procédé selon l'une quelconque des revendications 1 à 8.

10. Corps moulé, comprenant la composition de résine ignifuge selon la revendication 9.

11. Corps moulé selon la revendication 10, qui est un matériau isolant d'un fil électrique ou d'une gaine de fil électrique.

12. Fil électrique comprenant un matériau isolant d'un fil électrique et/ou d'une gaine de fil électrique, qui est le corps moulé selon la revendication 10.

13. Fil électrique selon la revendication 12, dans lequel le fil électrique est un fil électrique pour cordons d'alimentation, un fil électrique pour appareils électroménagers, ou un fil électrique pour installations électriques domestiques.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000191844 A
- EP 2562214 A1
- WO 2011132656 A
- JP 2003313377 A
- JP 2008097918 A
- JP 2008169257 A
- JP 2008094977 A
- JP 2009114230 A
- JP 2009054388 A
- JP 2009019190 A
- JP 2009216836 A
- WO 2004087775 A
- WO 200487775 A
- JP 2007186665 A


### Non-patent literature cited in the description


- **J. C. RANDALL.** *Macromolecules,* 1982, vol. 15, 353
- **J. RAY.** *Macromolecules,* 1977, vol. 10, 773
- *Analysis Chemistry,* 1971, vol. 43, 1245
- **J. C. RANDALL.** *Review Macromolecular Chemistry Physics,* 1989, vol. C29, 201